**Europäisches Patentamt**

**European Patent Office**

**Office européen des brevets**

(19)

(11) Numéro de publication : **0 430 747 B1**

## (12) FASCICULE DE BREVET EUROPEEN

(45) Date de publication du fascicule du brevet :
**19.01.94 Bulletin 94/03**

(51) Int. Cl.$^5$ : **G01C 19/72**

(21) Numéro de dépôt : **90403222.4**

(22) Date de dépôt : **14.11.90**

(54) **Dispositif de mesure à fibre optique, gyromètre, centrale de navigation et de stabilisation.**

(30) Priorité : **17.11.89 FR 8915117**

(43) Date de publication de la demande :
**05.06.91 Bulletin 91/23**

(45) Mention de la délivrance du brevet :
**19.01.94 Bulletin 94/03**

(84) Etats contractants désignés :
**AT BE CH DE DK ES FR GB GR IT LI LU NL SE**

(56) Documents cités :
**EP-A- 0 168 292**

(73) Titulaire : **PHOTONETICS S.A.**
**52, Avenue de l'Europe**
**F-78160 Marly le Roi (FR)**

(72) Inventeur : **Lefévre, Hervé**
**19 Rue des Cordelières**
**F-75013 Paris (FR)**
Inventeur : **Martin, Philippe**
**65 Boulvard Pasteur**
**F-94250 Fresnes (FR)**

(74) Mandataire : **Michelet, Alain et al**
**Cabinet Harlé et Phelip 21 rue de la**
**Rochefoucauld**
**F-75009 Paris (FR)**

EP 0 430 747 B1

# Description

L'invention concerne un dispositif de mesure à fibre optique permettant de mesurer la variation d'un paramètre qui produit des perturbations non réciproques dans un interféromètre en anneau de SAGNAC.

L'interféromètre de SAGNAC et les phénomènes physiques qu'il met en jeu sont bien connus. Dans un tel interféromètre, une lame séparatrice ou autre dispositif séparateur divise une onde incidente. Les deux ondes contra-propagatives ainsi créées se propagent en sens opposés le long d'un chemin optique fermé, se recombinent et produisent des interférences qui dépendent du déphasage des ondes lors de leur recombinaison.

A l'origine, le chemin optique fermé des interféromètres de SAGNAC était défini par des miroirs. Il est maintenant connu qu'il peut être constitué par une bobine multi-tour de fibre optique monomode.

Il est également connu que certains phénomènes physiques sont susceptibles de produire des perturbations, particulièrement des déphasages, non-réciproques, sur les ondes contra-propagatives engendrant un déphasage relatif de ces ondes qui modifient leur état d'interférence lors de leur recombinaison.

La mesure de ce déphasage relatif permet de quantifier le phénomène qui l'a engendré.

Le principal phénomène physique susceptible de créer ces perturbations non réciproques est l'effet SAGNAC produit par la rotation de l'interféromètre par rapport à un axe perpendiculaire au plan de son chemin optique fermé. L'effet FARADAY ou effet magnéto-optique colinéaire est également connu comme produisant des effets non réciproques de ce type ; cela a par exemple été décrit dans un article de la revue OPTIC LETTERS (Vol. 7, n° 4, Avril 1982, pages 180-182) par K. BOHM. D'autres effets peuvent, dans certaines conditions produire également un déphasage non réciproque.

Au contraire, les variations de nombreux paramètres représentatifs de l'environnement qui sont souvent à l'origine de perturbations des mesures n'ont que des effets réciproques sur l'interféromètre de SAGNAC, ne perturbent pas le déphasage relatif entre les ondes contra-propagatives et n'ont donc pas d'influence sur la mesure du paramètre étudié. Tel est le cas des variations lentes de température, d'indices, etc... qui modifient le chemin optique parcouru par les ondes, mais le modifient de manière réciproque.

De nombreux travaux ont été menés afin d'améliorer la sensibilité et la précision des mesures pouvant être réalisées avec un tel appareil de mesure. On pourra par exemple consulter sur ce sujet le Chapitre 9 intitulé "Fiber Optic Gyroscope" de Hervé C. LEFEVRE dans l'ouvrage "OPTICAL FIBER SENSORS" Vol. 2 -ARTECH HOUSE- 1989.

En particulier, il a tout d'abord été constaté que la réponse fournie par l'interféromètre de SAGNAC est de la forme $P = Po(1 + \cos \delta\Phi)$ et donc que la sensibilité de ce signal au voisinage de la différence de phase $\delta\Phi = 0$ est faible. Il a été proposé d'introduire une modulation de différence de phase, carrée d'amplitude de plus ou moins $\pi/2$ par exemple qui déplace le point de fonctionnement et produit un signal périodique dont l'amplitude est une fonction sinusoïdale du paramètre mesuré et que l'on peut donc exploiter avec une plus grande sensibilité et stabilité.

Il a ensuite été montré que la précision de la mesure est améliorée par l'utilisation d'une méthode de zéro également appelée fonctionnement en boucle fermée. Selon cette méthode, une différence de phase supplémentaire dite de contre-réaction $\delta\Phi_{cr}$ est appliquée et sert à compenser le déphasage $\delta\Phi_p$ produit par le paramètre mesuré. La somme de ces deux différences de phase $\delta\Phi_{cr}$ et $\delta\Phi_p$, est maintenue nulle, ce qui permet de faire fonctionner l'interféromètre avec la précision maximum. La mesure est réalisée par l'exploitation du signal nécessaire à la production de la différence de phase de contreréaction $\delta\Phi_{cr}$. Ainsi, la mesure est stable et linéaire.

L'asservissement nécessaire à ce fonctionnement en boucle fermée peut être réalisé par un décalage de fréquence. Ce décalage peut être généré directement à partir de modulateurs acousto-optiques ou bien simulé en appliquant une modulation serrodyne sur un modulateur de phase. Une telle modulation serrodyne est effectuée en appliquant une rampe de modulation de phase en dent de scie. Il est bien connu cependant que ceci nécessite une retombée bien contrôlée de $2m\pi$ (où m est entier) pour éviter les bandes latérales parasites L'exploitation du signal après les retombées permet cependant d'effectuer ce contrôle de la valeur de la retombée pour assurer une bonne précision de la mesure. Il est connu aussi qu'une rampe continue peut être remplacée par des marches synchronisées sur une horloge et qu'un tel signal peut être généré à partir d'un circuit logique et d'un convertisseur numérique-analogique.

Afin d'améliorer la sensibilité et la précision de la mesure, il a, par ailleurs, été proposé de numériser le signal dès la sortie du détecteur. Les moyens électroniques de traitement comportent alors un convertisseur analogique-numérique, un système de traitement numérique exploitant le signal fourni par le convertisseur analogique-numérique ramenant sa composante à la fréquence de modulation autour du continu. Un filtre numérique de boucle d'asservissement alimenté par le signal sortant du système de traitement numérique, fournit un signal représentatif du paramètre mesuré. Un registre recevant le signal sortant du filtre numérique de boucle d'asservissement fournit un signal fonction du paramètre mesuré pour tout usage externe souhaité. Un accumulateur alimenté par le signal sortant du registre, génère une rampe numérique dont la pente est fonction du paramètre mesuré et un convertisseur numérique-analogique alimenté par le signal de rampe issu de l'accumulateur commande le modulateur de phase. Un tel dispositif est divulgué par le document EP-A-0 168 292.

Le but de la présente invention est d'améliorer la sensibilité et la stabilité d'un dispositif de mesure à fibre optique dans lequel la variation d'un paramètre mesuré engendre une différence de phase entre deux ondes. En particulier, il a pour objectif de proposer un tel dispositif dans lequel le gain de la chaîne de commande de la modulation de contre-réaction est contrôlé et maintenu constant en tout moment y compris lorsque sur une longue période le paramètre mesuré ne subit pas de variation. En effet, selon les techniques antérieures, on utilise des signaux produits lors de la retombée à deux pi de la rampe de phase pour maintenir constant ce gain. Or, de tels signaux ne sont pas disponibles dur de faibles variations du paramètre mesuré, et leur fréquence dépend de la valeur du paramètre mesuré.

L'invention concerne un dispositif de mesure à fibre optique dans lequel la variation du paramètre mesuré engendre une différence de phase entre deux ondes, comportant une source lumineuse quasi-monochromatique, un interféromètre en anneau de SAGNAC, de préférence monomode, dans lequel se propagent deux ondes contra-propagatives, le temps de propagation des ondes entre leur séparation et leur recombinaison étant $\tau$, un détecteur, un modulateur de phase, et des moyens électroniques comportant un sytème de traitement fournissant un signal fonction du paramètre mesuré et des moyens électroniques commandant le modulateur de phase.

Selon l'invention, le signal de modulation $\Phi_m$ est déterminé de telle sorte que la modulation de la différence de phase $\delta\Phi_m$ qu'il produit entre les ondes contra-propagatives prenne périodiquement les quatre valeurs suivantes :

$$\delta\Phi_1 = \Phi_o \qquad \delta\Phi_2 = a\Phi_o$$
$$\delta\Phi_3 = -\Phi_o \qquad \delta\Phi_4 = -a\Phi_o$$

où $\Phi_0$ est un déphasage constant et dépendant de a, a est une contante positive satisfaisant la condition :

$$\cos\Phi_o = \cos a\Phi_o$$

Le système de traitement exploite le signal d'interférence revenant de l'interféromètre. Ce signal prend périodiquement quatre valeurs x1, x2, x3, x4 correspondant respectivement aux niveaux de modulation $\delta\Phi_1$, $\delta\Phi_2$, $\delta\Phi_3$ et $\delta\Phi_4$.

Le résultat de l'opération (x1 + x3) - (x2 + x4) donne un signal Xg qui est significatif du gain de la chaîne de commande de modulation. En particulier Xg = 0 quand la condition $\cos \Phi_o = \cos (a \Phi_o)$ est respectée. Ce signal Xg sert de signal d'erreur pour une boucle d'asservissement du gain de la chaîne de commande de modulation.

De préférence l'opération (x1 + x4) - (x2 + x3) conduit à un signal Xp dépendant du déphasage non-réciproque $\delta\Phi_p$ à mesurer dans l'interféromètre. Le signal Xp peut alors servir de signal d'erreur pour asservir le déphasage total de l'interféromètre à zéro en compensant le déphasage non-réciproque $\delta\Phi_p$ avec un déphasage opposé $\delta\Phi_{cr}$. Ce déphasage $\delta\Phi_{cr}$ étant généré à travers la même chaîne de commande que la modulation $\delta\Phi_m$, l'asservissement de cette chaîne avec le signal Xg permet donc d'avoir une mesure stable et contrôlée de $\delta\Phi_{cr}$, et donc finalement de $\delta\Phi_p$ qui lui est opposé et qui est le paramètre que l'on cherche à mesurer. Xg est donc indépendant du déphasage $\delta\Phi_p$ alors qu'il est significatif du gain de la chaîne de commande de modulation.

Ces moyens électroniques sont numériques et comportent un convertisseur analogique-numérique destiné à numériser le signal généré par le détecteur, un système à traitement numérique exploitant le signal fourni par le convertisseur analogique-numérique, un filtre numérique de boucle d'asservissement alimenté par le signal sortant du système de traitement numérique et fournissant un signal représentatif du paramètre mesuré, un registre recevant le signal sortant du filtre numérique de boucle d'asservissement et fournissant un signal fonction du paramètre mesuré pour tout usage externe souhaité, un générateur de modulation produisant un signal de modulation., un additionneur comportant deux entrées et une sortie, sa première entrée étant alimentée par le signal fonction du paramètre mesuré produit par le registre, sa deuxième entrée étant alimentée par le signal de modulation, un convertisseur numérique-analogique alimenté par le signal de sortie de l'additionneur et commandant le modulateur de phase.

L'invention sera décrite en détail en référence aux dessins dans lesquels :

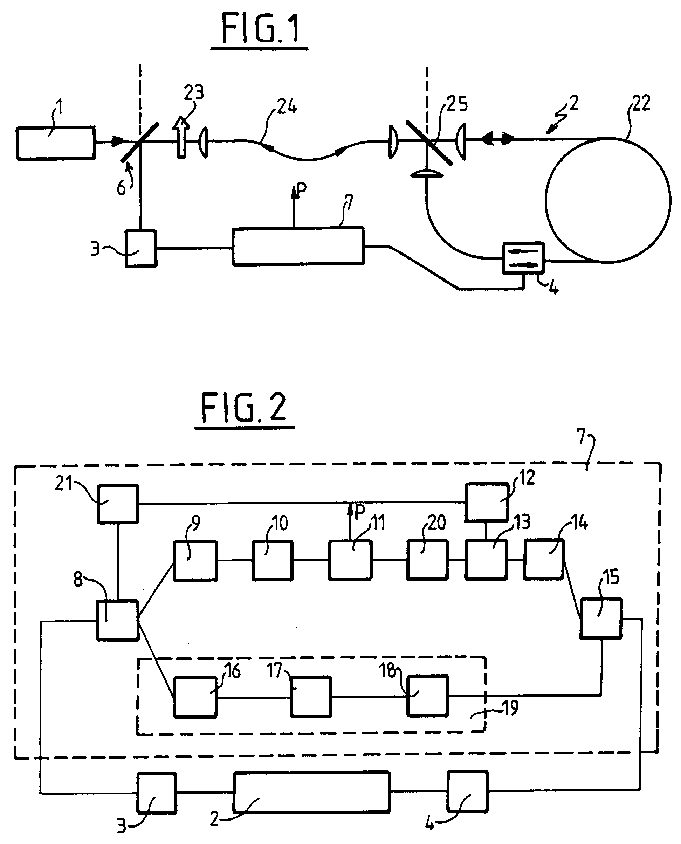

. La figure 1 est une représentation générale du dispositif de mesure de l'invention.

. La figure 2 est un schéma fonctionnel représentant le traitement du signal.

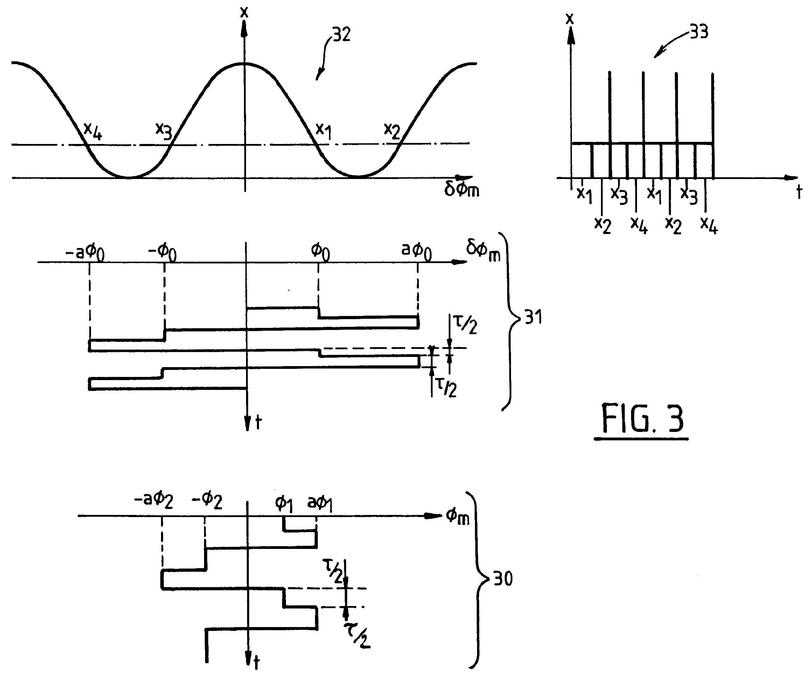

. La figure 3 représente la différence de phase dans l'interféromètre et le signal correspondant produit par le détecteur en l'absence de variation du paramètre mesuré pour le signal de modulation.

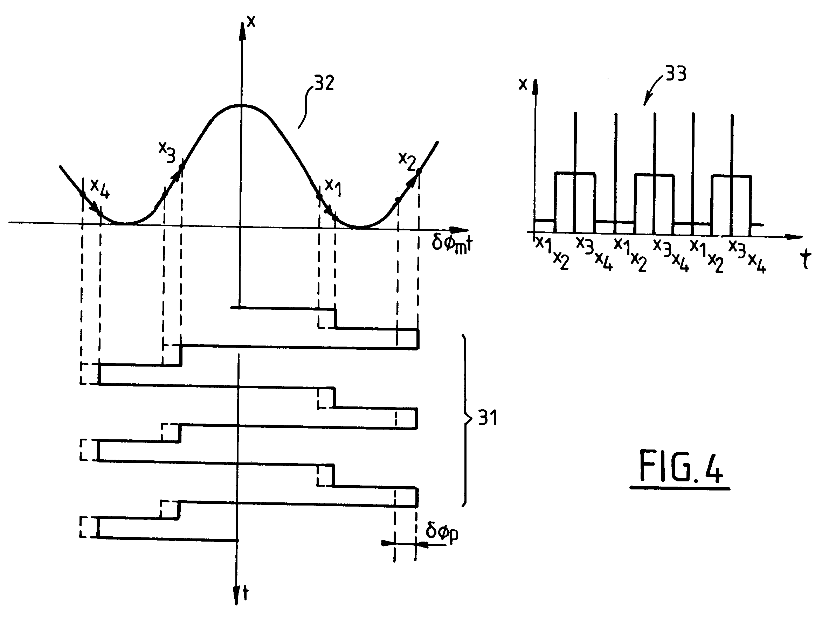

. La figure 4 représente la différence de phase dans l'interféromètre et le signal correspondant produit par le détecteur lors d'une variation du paramètre mesuré avec le signal de modulation.

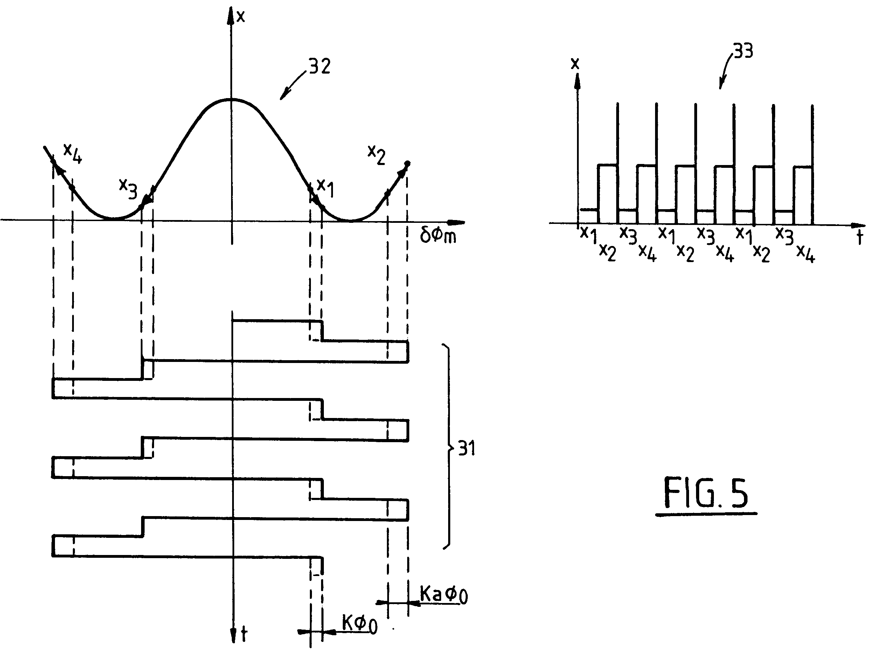

. La figure 5 représente la différence de phase dans l'interféromètre et le signal produit par le détecteur lors d'une variation du gain de la chaîne de commande de la modulation, avec le signal de modulation.

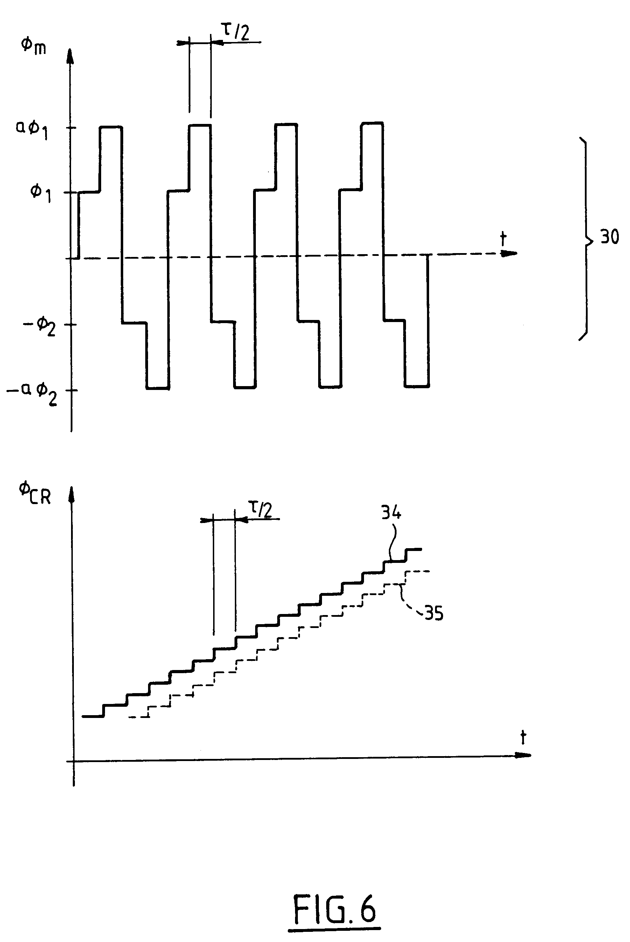

. La figure 6 représente la modulation de phase $\Phi_m$ et la phase de contre réaction $\Phi_{cr}$.

Le dispositif de mesure à fibre optique de l'invention comporte une source lumineuse quasi-monochromatique 1 qui est le plus souvent un laser ou une diode super luminescente, un interféromètre en anneau de SAGNAC à fibre optique monomode globalement désigné par la référence 2.

Cet interféromètre en anneau 2 comporte une lame séparatrice 25 assurant la séparation des ondes à l'entrée de l'interféromètre puis leur recombinaison à la sortie, un chemin optique fermé 22 constitué par une fibre optique monomode enroulée sur elle-même.

Ce dispositif de mesure comporte également un détecteur 3 fournissant un signal fonction de l'état d'interférence des ondes à la sortie de l'interféromètre lui-même.

Le signal optique est fourni au détecteur 3 par l'intermédiaire d'un séparateur 6 par exemple constitué d'une lame semi-transparente.

A une extrémité du chemin optique de l'interféromètre est interposé un modulateur 4, qui commandé à partir d'un signal électrique, est susceptible d'introduire une différence de phase entre les deux ondes. Le fonctionnement de l'interféromètre est amélioré en interposant entre la source lumineuse 1 et l'entrée de l'anneau 22, c'est-à-dire au niveau de la lame séparatrice 25, un polarisateur 23 et un filtre spatial 24. De manière connue, ce filtre spatial est constitué par un fibre optique monomode.

Des moyens électroniques 7 commandent en contre-réaction le modulateur de phase 4 en fonction du signal reçu du détecteur 3.

Ces moyens électroniques 7 sont configurés de telle sorte que la variation du signal d'erreur démodulé en fonction de la différence de marche produite entre les deux ondes au voisinage du zéro soit approximativement linéaire. Cette disposition permet d'obtenir une très bonne sensibilité de la variation du signal d'erreur démodulé au voisinage du zéro de la différence de marche alors qu'il est aisément compréhensible que lorsque la dépendance du signal par rapport à la différence de marche est de forme cosinusoïdale la sensibilité au voisinage de zéro de la différence de marche est très faible.

De plus, ces moyens électroniques 7 comportent des moyens 19 qui ont pour fonction de stabiliser le gain de la chaîne de commande du modulateur. C'est-à-dire que ce gain est asservi afin que pour un paramètre à calibrer, la modulation de discrimination $\delta\Phi_m$ aient quatre états $\Phi_o$, $\alpha\Phi_o$, $-\Phi_o$ et $-a\Phi_o$ qui respectent $\cos\Phi_o = \cos -\Phi_o = \cos a\Phi_o = \cos -\alpha\Phi_o$.

D'autre part, ces moyens électroniques 7 ont pour fonction de maintenir la différence de marche nulle. C'est-à-dire que lorsque la variation du paramètre mesuré introduit un déphasage entre les deux ondes dans l'interféromètre, ce déphasage produit une variation du signal émis par le détecteur 3 entraînant par l'intermédiaire des moyens électroniques 7 et du modulateur de phase 4 une action égale et de sens inverse au déphasage initialement produit, de telle sorte que, le déphasage global est ramené à la valeur nulle. La première boucle asservissant le gain de la chaîne de commande de la modulation, la mesure du déphasage de contre-réaction est alors très précise.

Enfin, ces moyens électroniques 7 fournissent par exploitation du signal de commande du modulateur de phase 4 un signal fonction de la variation du paramètre mesuré.

Les moyens électroniques 7 comportent un convertisseur analogique-numérique 8 destiné à numériser le signal émis par le détecteur 3.

La dynamique du convertisseur analogique-numérique 8 peut être relativement faible par rapport à la dynamique de mesure de l'ensemble. Cette dynamique se détermine à partir de la définition de la limite basse et de la limite haute.

La limite basse est déterminée de telle sorte que la valeur analogique correspondant au bit de poids faible ait une valeur inférieure ou égale à l'écart type du bruit du signal venant du détecteur. Cette condition évite une zone aveugle correspondant au bit de poids faible, et rend négligeable le bruit d'échantillonnage par rapport au bruit initial du signal analogique, et de plus, un filtrage numérique additionnel conduit dans ce cas à la même amélioration du rapport signal à bruit qu'en analogique. Selon un exemple pratique, la période d'échantillonnage est de l'ordre du temps de transit dans la bobine soit par exemple $\tau$ : 0,5$\mu$s pour 100 mètres de fibre. Le critère de Shannon impose donc une bande passante importante au signal à échantilloner : il faut qu'elle soit égale à 1/2$\tau$ soit 1MHz dans cet exemple. Dans une telle bande passante le bruit est relativement important : typiquement un écart-type de $10^{-3}$ de la puissance retour au biais ce qui correspond à environ un déphasage de $10^{-3}$ radian dans l'interféromètre . Il est donc suffisant que le bit de poids faible corresponde à ce déphasage pour ne pas perdre de sensibilité et pour pouvoir ensuite par filtrage numérique améliorer le rapport signal à bruit.

La limite haute, quant à elle, doit être au moins supérieure à la valeur pic à pic du bruit soit environ 8 fois son écart-type et donc 3 bits suffiraient pour l'échantillonnage du bruit seul. Cependant, il faut aussi tenir compte de la dynamique propre du signal : en boucle fermée celui-ci est as servi à zéro et ne réclamerait donc pas a priori de dynamique mais, en pratique, l'asservissement s'écarte de zéro lors de variations brusques du paramètre à mesurer et la dynamique du convertisseur doit pouvoir supporter ces écarts. Ces variations définissent donc le nombre de bits nécessaires. En pratique 8 à 12 bits suffisent au niveau du convertisseur alors qu'après filtrage numérique la dynamique du paramètre mesuré peut être supérieure à 20 bits.

L'horloge 21 pilote l'ensemble des composants.

Un système à traitement numérique 9 exploite le signal fourni par le convertisseur analogique-numérique 8. Il est suivi d'un filtre numérique de boucle d'asservissement 10 alimenté par le signal sortant du système de traitement numérique et fournissant un signal représentatif du paramètre mesuré.

Un registre 11 reçoit le signal sortant du filtre numérique de boucle d'asservissement et fournit un signal fonction du paramètre mesuré utilisable pour tout usage externe souhaité.

Un générateur de modulation 12 produit un signal de modulation. L'additionneur 13 comporte deux entrées et une sortie. Sa première entrée est alimentée par un signal généré par l'accumulateur 20 et fonction du paramètre mesuré produit par, le registre 11, sa deuxième entrée est alimentée par le signal de modulation produit par le générateur 12.

Un convertisseur numérique-analogique 14 alimenté par le signal de sortie de l'additionneur 13 commande le modulateur de phase 4 par l'intermédiaire de l'amplificateur de gain 15. Le signal de modulation produit par le générateur 12 assure le fonctionnement du système de mise au biais c'est-à-dire une dépendance approximativement linéaire entre le déphasage introduit entre les deux ondes contra-propagatives circulant dans l'interféromètre et le signal produit dans le détecteur 3. A cet effet, le signal de modulation $\Phi_m$ est déterminé de telle sorte que la modulation de la différence de phase $\delta\Phi_m$ qu'il produit entre les ondes contra-propagatives prenne périodiquement les quatre valeurs suivantes :

$$\delta\Phi_1 = \Phi_o \qquad \delta\Phi_2 = a\Phi_o$$
$$\delta\Phi_3 = -\Phi_o \qquad \delta\Phi_4 = -a\Phi_o$$

où $\Phi_o$ est un déphasage constant et dépendant de a, a est une contante positive satisfaisant la condition :

$$\cos\Phi_o = \cos a\Phi_o$$

Le système de traitement exploite le signal d'interférence revenant de l'interféromètre. Ce signal prend périodiquement quatre valeurs x1, x2, x3, x4 correspondant respectivement aux niveaux de modulation $\delta\Phi_1$, $\delta\Phi_2$, $\delta\Phi_3$ et $\delta\Phi_4$.

D'une part des moyens électroniques 16 effectuent l'opération (x1 + x3) - (x2 + x4) afin de produire un signal Xg qui est indépendant du déphasage $\delta\Phi_p$ mais est par contre significatif du gain de la chaîne de commande de modulation. En particulier, Xg = 0 quand la condition $\cos\Phi_o : \cos(a\Phi_o)$ est respectée. Ce signal Xg peut donc servir de signal d'erreur pour une boucle d'asservissement du gain de la chaîne de commande de modulation.

Le signal Xp peut alors servir de signal d'erreur pour asservir le déphasage total de l'interféromètre à zéro en compensant le déphasage non-réciproque $\delta\Phi_p$ avec un déphasage opposé $\delta\Phi_{cr}$. Ce déphasage $\delta\Phi_{cr}$ étant généré à travers la même chaîne de commande que la modulation $\delta\Phi_m$, l'asservissement de cette chaîne avec le signal Xg permet donc d'avoir une mesure stable et controlée de $\delta\Phi_{cr}$, et donc finalement de $\delta\Phi_p$ qui lui est opposé et qui est le paramètre que l'on cherche à mesurer. Les moyens électroniques 9 effectuent l'opération (x1 + x4) - (x2 + x3) pour produire un signal Xp dépendant du déphasage non-réciproque $\delta\Phi_p$ à mesurer dans l'interféromètre.

La figure 3 représente un mode de réalisation préféré du signal de modulation, la différence de phase ainsi engendrée entre les ondes contra-propagatives de l'interféromètre, et le signal correspondant fourni par le détecteur 3. Les notations utilisées sur l'ensemble des figures correspondent à celles déjà indiquées. De plus -t- représente le temps.

Dans le mode de réalisation préféré, représenté à la figure 3, le signal de modulation $\Phi_m$ du déphasage a une période égale à $2\tau$. Chaque période est composée d'une impulsion de durée $\tau/2$ et d'amplitude $\Phi_1$, et d'impulsions de même durée et d'amplitude respective $a\Phi_1$, $-\Phi_2$ et $-a\Phi_2$. Ce signal de modulation $\Phi_m$ produit donc une modulation $\delta\Phi_m$ de la différence de phase entre les deux ondes contra-propagatives. $\delta\Phi_m$ a aussi une période $2\tau$ et prend successivement pendant quatre temps $\tau/2$ les valeurs $\Phi_o$, $a\Phi_o$, $-\Phi_o$ et $-a\Phi_o$ avec $\Phi_o = \Phi_1 + \Phi_2$, $\Phi_o$ et $a\Phi_o$ sont déterminées de telle manière qu'elles produisent une réponse de l'interféromètre de même niveau, le dérivé de ce niveau en fonction de l'amplitude du signal de modulation pour chacune de ces impulsions étant respectivement positif et négatif. Cette condition est satisfaisante lorsque $\cos\Phi_o = \cos a\Phi_o$. On maintient une dépendance approximativement linéaire du signal fourni par le détecteur 3 en fonction du déphasage entre les ondes contra-propagatives introduites par le paramètre mesuré en choisissant $\Phi_o$ aux alentours de $\pi/2$, par exemple entre $\pi/3$ et $2\pi/3$. Par exemple si a = 2, $\Phi_o = 2\pi/3$, si a = 3, $\Phi_o = \pi/2$, si a = 4, $\Phi_o = 2\pi/5$,...

Le signal de modulation 30 introduit par l'intermédiaire du modulateur de phase 4 un déphasage $\Phi_m$ sur les ondes contra-propagatives. A cause du retard dans la bobine 2 ce déphasage $\Phi_m$ introduit une différence de phase $\delta\Phi_m$ représentée en 31 qui est constituée par la différence entre le signal de modulation et ce même signal retardé de $\tau$. La réponse de l'interféromètre constituée par le signal fourni par le détecteur 3 en fonction de la différence de phase $\delta\Phi$ entre les ondes contra-propagatives est représenté en 32. Le signal fourni par le détecteur 3 en réponse à la différence de phase représentée en 31 est donc ainsi représenté en, 33. Les valeurs du signal x1, x2, x3, x4 correspondent respectivement aux différences de phase $\delta\Phi_1$, $\delta\Phi_2$, $\delta\Phi_3$, $\delta\Phi_4$ établis entre les ondes contra-propagatives.

La variation du paramètre engendre l'addition d'une différence de phase supposée constante $\delta\Phi_p$ au signal de modulation. Son effet, est représenté sur la figure 4 : $\delta\Phi_p$ engendre une variation de même sens pour x1 et x4 d'une part et pour x2 et x3 d'autre part, chacune de ces variations étant de signes opposés. Ainsi, le système à traitement numérique 9 produit un signal fonction du paramètre mesuré en exploitant les quatre signaux respectifs fournis en réponse à une période du signal de modulation selon la formule (x1 + x4) - (x2 + x3).

Ce mode de réalisation préférée est particulièrement avantageux car les signaux produisant des variations de même sens, x1 et x4 d'une part, x2 et x3 d'autre part sont successifs. L'opération (x1 + x4) - (x2 + x3) est en fait une démodulation à la fréquence de modulation $1/2\tau$ de $\delta\Phi_m$. Cette fréquence $1/2\tau$ est connue sous le nom de fréquence propre, et il est connu qu'en travaillant à cette fréquence, l'effet des différents défauts du modulateur sur le biais est éliminé. Ce mode de réalisation préférée conserve donc cette propriété très générale de la fréquence propre, tout en apportant la possibilité de contrôler le gain de la chaîne de modulation.

De plus, un tel signal de modulation permet de maintenir constant avec des moyens 19, simples le gain de la chaîne de commande de la modulation. Sur la figure 5 on a représenté l'effet d'une variation d'un facteur (1 + K) du gain de la chaîne de commande de la modulation. En pratique cette variation peut être engendrée par une modification de l'environnement et donc des conditions de fonctionnement du modulateur de phase 4 ou de l'amplificateur de gain 15 ou de la tension analogique de référence du convertisseur 14. La différence de phase $\delta\Phi_m$ introduite entre les ondes contra-propagatives de l'interféromètre subit alors une homothétie par exemple de valeur (1 + K). Cette homothétie produit des variations de même sens d'une part de x1 et x3 et d'autre part de x2 et x4, chacun de ces groupes variant dans un sens opposé. Une unité de traitement 16 exploite les quatre signaux successifs de manière à fournir un signal selon la formule (x1 + x3) - (x2 + x4) qui est fonction du gain de la chaîne de commande de la modulation. Ce signal est filtré par un filtre intégrateur numérique de bouche d'asservissement 17 puis alimente un convertisseur numérique-analogique 18 qui commande le gain de l'amplificateur de gain 15 de la tension analogique de référence du convertisseur 14. Ainsi, le gain de la chaîne de commande de la modulation est maintenu constant entre la valeur numérique du signal et la modulation de phase effectivement appliquée. Les signaux commandant le modulateur de phase en fonction du signal reçu par le détecteur d'une part, et ceux destinés à maintenir constant le gain de la chaîne de commande de la modulation, d'autre part sont multipliés, l'un avec l'autre.

De préférence, le signal de modulation a une période égale à $2\tau$ et, chaque période est composé de quatre éléments de durée $\tau/2$, d'amplitudes respectives $\Phi_1$, $a\Phi_1$, $-\Phi_2$, $-a\Phi_2$ avec $\Phi_1 + \Phi_2 = \Phi_0$ et en particulier $\Phi_1 = \Phi_2 = \Phi_0/2$ ou $\Phi_1 = \Phi_0$ et $\Phi_2 = o$. Le signal de contre réaction 34 est obtenu par un accumulateur 20 à partir du registre numérique 11 de stockage de la valeur du paramètre mesuré, cet accumulateur 20 se composant d'un intégrateur numérique qui, à chaque intervalle de temps $\tau/2$ additionne la valeur du registre numérique à sa valeur précédente. L'une des ondes voit le modulateur en sortie et subit directement le signal de contre réaction 34. L'autre voit le modulateur en sortie et subit une modulation 35 identique à la modulation 34 mais décalée du temps de propagation $\tau$.

Le dispositif de mesure de l'invention est particulièrement bien adapté à la réalisation d'un gyromètre. Dans ce cas, le paramètre mesuré est la vitesse de rotation de l'interféromètre autour de son axe.

Ce gyromètre entre avantageusement dans la réalisation de systèmes de contrôle de navigation ou de stabilisation inertielle.

Une telle disposition est également bien adaptée à la réalisation d'un dispositif de mesure de champs magnétiques et de courant électrique en mettant à profit l'effet FARADAY.

**Revendications**

1. Dispositif de mesure à fibre optique du type dans lequel la variation d'un paramètre mesuré engendre une différence de phase entre deux ondes, comportant :
   - une source lumineuse quasi-monochromatique (1),
   - un interféromètre en anneau de SAGNAC (2) de préférence monomode, dans lequel se propagent deux ondes contra-propagatives, le temps de propagation des ondes entre leur séparation et leur recombinaison étant $\tau$,
   - un détecteur (3) recevant le flux lumineux sortant de l'interféromètre (2) et le convertissant en un signal électrique représentant la différence de phase entre les ondes contra-propagatives,
   - un modulateur de phase (4),
   - des moyens électroniques (7) comportant un convertisseur analogique-numérique (8) numérisant le signal électrique reçu du détecteur (3) ) un système de traitement (9) fournissant un signal fonction du paramètre mesuré et des moyens électroniques (12) commandant le modulateur de phase (4), caractérisé en ce que
   les moyens électroniques (12) commandant le modulateur de phase produisent un signal de commande $\Phi_m$ du modulateur déterminé de telle sorte que la différence de phase $\delta\Phi_m$ qu'il produit entre les ondes contra-propagatives prenne périodiquement les quatre valeurs successives suivantes :

$$\delta\Phi_1 = \Phi_0 \qquad \delta\Phi_2 = a\Phi_0$$
$$\delta\Phi_3 = -\Phi_0 \qquad \delta\Phi_4 = -a\Phi_0$$

   où $\Phi_0$ est un déphasage constant et dépendant de a, a est une constante positive fixée

satisfaisant la condition :

$$\cos\Phi_o = \cos a\Phi_o$$

et qu'il comporte un système de traitement (19) de maintien constant du gain de la chaîne de commande de la modulation produisant un signal fonction dudit gain en exploitant les quatre valeurs x1, x2, x3, x4 fournies en réponse à une période du signal de modulation selon la formule (x1 + x3) - (x2 + x4), ledit signal fonction du gain agissant sur la chaîne de modulation de façon à maintenir le gain constant.

2. Dispositif de mesure à fibre optique selon la revendication 1, caractérisé en ce que le système de traitement (9) produit un signal fonction du paramètre mesuré en exploitant les quatre valeurs x1, x2, x3, x4 fournies en réponse à une période du signal de modulation selon la formule (x1 + x4) - (x2 + x3).

3. Dispositif de mesure à fibre optique selon l'une des revendications 1 ou 2 caractérisé en ce que les moyens électroniques (7) commandent en contre-réaction le modulateur de phase (4) en fonction du signal reçu du détecteur (3) de telle sorte que d'une part la variation du signal d'erreur démodulé en fonction de la différence de phase au voisinage du zéro soit approximativement linéaire, que d'autre part cette différence de phase soit maintenue nulle et fournissant par exploitation du signal de modulation (4) un signal fonction de la variation du paramètre mesuré.

4. Dispositif de mesure à fibre optique selon l'une quelconque des revendications 1 à 3, caractérisé en ce que lesdits moyens électroniques (7) comportent, en plus du système de traitement (9) :

- une horloge (21) synchronisant l'ensemble des composants,
- le convertisseur analogique-numérique (8) étant déterminé de telle sorte que la valeur analogique de son bit de poids faible ait une valeur inférieure ou égale à l'écart-type du bruit du signal venant du détecteur (3),
- un filtre numérique de boucle d'asservissement (10), alimenté par le signal sortant du système de traitement numérique (9), fournissant un signal représentatif du paramètre mesuré,
- un registre (11) recevant le signal sortant du filtre numérique de boucle d'asservissement et fournissant un signal fonction du paramètre mesuré pour tout usage externe souhaité,
- un accumulateur (20) alimenté par le signal sortant du registre (11), générant un signal de contre-réaction du paramètre mesuré,

- un générateur de modulation (12) produisant un signal de modulation $\Phi_m$,
- un additionneur (13) comportant deux entrées, et une sortie, sa première entrée étant alimentée par le signal fonction du paramètre mesuré produit par l'accumulateur (20), sa deuxième entrée étant alimentée par le signal de modulation,
- un convertisseur numérique-analogique (14) alimenté par le signal de sortie de l'additionneur et commandant le modulateur de phase (4) par l'intermédiaire d'un amplificateur de gain (15).

5. Dispositif de mesure à fibre optique selon la revendication 4 caractérisé en ce que le système de traitement 19, de maintien constant du gain de la chaîne de commande de la modulation comporte une unité 16 exploitant quatre signaux successifs x1, x2, x3, x4 et fournissant un signal fonction de (x1 + x3) - (x2 + x4), un filtre numérique 17 intégrant le signal émis par l'unité 16, un convertisseur numérique analogique 18 convertissant le signal fourni par le filtre 17 et commandant l'amplificateur de gain 15 ou bien la tension analogique de référence du convertisseur 14.

6. Dispositif de mesure à fibre optique selon l'une quelconque des revendications 1 à 5 caractérisé en ce que le signal de modulation a une période égale à $2\tau$ et que, chaque période est composé de deux éléments successifs de durée $\tau/2$, d'amplitudes respectives $\Phi_1$ et $a\Phi_1$ suivis de deux éléments de durée $\tau/2$, successifs, d'amplitude respectives - $\Phi_2$ et - a $\Phi_2$ avec $\Phi_1 + \Phi_2 = \Phi_o$.

7. Dispositif de mesure à fibre optique selon l'une quelconque des revendications 1 à 6 caractérisé en ce que :

$$a = 3$$

8. Dispositif de mesure à fibre optique selon l'une quelconque des revendications 1 à 6 caractérisé en ce que :

$$a = 2$$

9. Dispositif de mesure à fibre optique selon la revendication 6 caractérisé en ce que le signal de contre réaction est obtenu par un accumulateur à partir du registre numérique de stockage de la valeur du paramètre mesuré, cet accumulateur (20) se composant d'un intégrateur numérique qui, à chaque intervalle de temps $\tau/2$ additionne la valeur du registre numérique à sa valeur précédente.

10. Gyromètre, caractérisé en ce qu'il est conforme au dispositif de mesure de l'une quelconque des revendications 1 à 7, le paramètre mesuré étant la vitesse de rotation de l'interféromètre autour de son axe.

11. Contrôle de navigation ou de stabilisation inertielle comportant au moins un gyromètre selon la revendication 10.

12. Capteur de courant et de champ magnétique, caractérisé en ce qu'il est conforme au dispositif de mesure de l'une quelconque des revendications 1 à 9, la variation de la différence de phase étant produite par le paramètre mesuré par effet FARADAY.

## Claims

1. Fibre optic measuring device of the type in which the chance in a measured parameter generates a phase difference between two waves, comprising :
   - a quasi-monochromatic light source (1),
   - a SAGNAC ring interferometer (2), preferably monomode, in which two counter-propagating waves propagate, the time for propagation of the waves between their separation and their recombination being $\tau$,
   - a detector (3) receiving the luminous flux leaving the interferometer (2) and converting it into an electrical signal representing the phase difference between the counter-propagating waves,
   - a phase modulator (4), and
   - electronic means (7) comprising an analog-digital converter (8) digitizing the electrical signal received from the detector (3), a processing system (9) delivering a signal depending on the measured parameter and electronic means (12) controlling the phase modulator (4), characterized in that
   the electronic means (12) controlling the phase modulator produce a control signal $\Phi_m$ for the modulator determined in such a way that the phase differrence $\delta\Phi_m$ which it produces between the counter-propagating waves periodically takes the following four successive values :

$$\delta\Phi_1 = \Phi_0 \qquad \delta\Phi_2 = a\Phi_0$$
$$\delta\Phi_3 = -\Phi_0 \qquad \delta\Phi_4 = -a\Phi_0$$

   where $\Phi_0$ is a constant phase shift and it depends on a, and a is a set positive constant satisfying the condition

$$\cos\Phi_0 = \cos a\Phi_0$$

   and that it comprises a processing system (19) for Keeping constant the gain of the channel for controlling the modulation producing a signal depending on the said gain by exploiting the four values x1, x2, x3, x4 delivered in reponse to a period of the modulation signal according to the expression (x1 + x3) - (x2 + x4), the said signal which is dependent of the gain acting on the modulation channel in such a way as to keep the gain constant.

2. Fibre optic measuring device according to Claim 1, characterized in that the processing system (9) produces a signal depending on the measured parameter by exploiting the four values x1, x2, x3, x4 delivered in reponse to a period of the modulation signal according to the expression (x1 + x4) - (x2 + x3).

3. Fibre optic measuring device according to one of Claims 1 or 2, characterized in that the electronic means (7) control the phase modulator (4) in negative feedback mode as a function of the signal received from the detector (3) in such a way that, on the one hand, the change in the error signal demodulated as a function of the phase difference in the neighbourhood of zero is approximately linear, and on the other hand, this phase difference is kept at zero and delivering a signal depending on the change in the measured parameter by exploiting the modulation signal (4).

4. Fibre optic measuring device according to any one of Claims 1 to 3, characterized in that the said electronic means (7) comprise, besides the processing system (9) :
   - a clock (21) synchronising all of the components,
   - the analog-digital converter (8) being specified in such a way that the analog value of its least significant bit has a value less than or equal to the standard deviation of the noise of the signal coming from the detector (3),
   - a digital servocontrol loop filter (10), fed by the signal leaving the digital processing system (9), delivering a signal representing the measured parameter,
   - a register (11) receiving the signal leaving the digital servocontrol loop filter and delivering a signal depending on the measured parameter for any desired external use,
   - an accumulator (20) fed by the signal leaving the register (11), generating a negative feedback signal from the measured parameter,
   - a modulation generator (12) producing a modulation signal $\Phi_m$,
   - an adder (13) comprising two inputs and one output, its first input being fed by the signal depending on the measured parameter produced by the accumulator (20), its second input being fed by the modulation signal, and
- a digital-analog converter (14) fed the output signal from the adder and controlling the phase modulator (4) by way of a gain amplifier (15).

5. Fibre optic measuring device according to Claim 4, characterized in that the processing system (19) for keeping constant the gain of the channel for controlling the modulation comprises a unit (16) exploiting four successive signals x1, x2, x3, x4 and delivering a signal depending on $(x1 + x3) - (x2 + x4)$, a digital closed loop integrator filter (17) filtering the signal emitted by the unit (16), a digital-analog converter (18) converting the signal delivered by the filter (17) and controlling the gain amplifier (15) or the reference analog value of the converter (14).

6. Fibre optic measuring device according to any one of Claims 1 to 5, characterized in that the modulation signal has a period $2\tau$ and that each period consists of two successive elements of duration $\tau/2$, of amplitudes $\Phi_1$ and $a\Phi_1$ respectively, followed by two successive elements of duration $\tau/2$ of amplitude $-\Phi_2$ and $-a\Phi_2$ respectively, with $\Phi_1 + \Phi_2 = \Phi_0$.

7. Fibre optic measuring device according to any one of Claims 1 to 6, characterized in that :
$$a = 3.$$

8. Fibre optic measuring device according to any one of Claims 1 to 6, characterized in that :
$$a = 2.$$

9. Fibre optic measuring device according to Claim 6, characterized in that the negative feedback signal in obtained by an accumulator from the digital register for storing the value of the measured parameter, this accumulator (20) consisting of a digital integrator which, in each interval of time $\tau/2$, adds the value of the digital register to its previous value.

10. Gyrometer, characterized in that it conforms to the measuring device of any one of Claims 1 to 7, the measured parameter being the speed of rotation of interferometer around its axis.

11. Navigation or inertial stabilisation control, comprising at least one gyrometer according to Claim 10.

12. Current and magnetic field sensor, characterized in that it conforms to the measuring device of any one of Claims 1 to 9, the change in the phase difference being produced by the measured parameter through the Faraday effect.

**Patentansprüche**

1. Faseroptik-Meßvorrichtung des Typs, bei dem die Variation eines gemessenen Parameters eine Phasendifferenz zwischen zwei Wellen erzeugt, mit:
    - einer quasi-monochromatischen Lichtquelle (1),
    - einem in einem vorzugsweise eintypig ausgebildeten SAGNAC-Ring (2) angeordneten Interferometer, in dem sich zwei sich gegenläufig ausbreitende Wellen ausbreiten, wobei die Ausbreitungszeit der Wellen zwischen ihrer Trennung und ihrer Wiedervereinigung $\tau$ ist,
    - einem Detektor (3), der den aus dem Interferometer (2) austretenden Lichtfluß empfängt und ihn in ein elektrisches Signal umsetzt, das die Phasendifferenz zwischen den gegenläufigen Wellen repräsentiert,
    - einem Phasenmodulator (4),
    - elektronischen Einrichtungen (7), die einen Analog-Digital-Konverter (8), der das von dem Detektor (3) empfangene elektrische Signal digitalisiert, ein Verarbeitungssystem ( 9), das ein Signal als Funktion des gemessenen Parameters erzeugt, und elektronische Einrich- tungen (12) aufweisen, die den Phasenmodulator (4) steuern, dadurch gekennzeichnet, daß

die den Phasenmodulator steuernden elektronischen Einrichtungen (12) ein Modulator-Steuersignal $\phi_m$ erzeugen, das derart beschaffen ist, daß die Phasendifferenz $\delta\phi_m$, die es zwischen den sich gegenläufig ausbreitenden Wellen erzeugt, periodisch die folgenden vier aufeinanderfolgenden Werte annimmt:
$$\delta\phi_1 = \phi_0 \qquad \delta\phi_2 = a\phi_0$$
$$\delta\phi_3 = -\phi_0 \qquad \delta\phi_4 = -a\phi_0$$
wobei $\phi_0$ eine konstante und von a abhängige Phasenverschiebung ist und a eine festgelegte positive Konstante ist, die die Bedingung
$$\cos\phi_0 = \cos a\phi_0$$
erfüllt,
und daß die Vorrichtung ein Verarbeitungssystem (19) zur Konstanthaltung des Verstärkungefaktors der Befehlskette der Modulation aufweist, das durch Auswertung der vier Werte x1, x2, x3, x4, die als Reaktion auf eine Periode des Modula- tionssignals nach der Formel $(x1 + x3) - (x2 + x4)$ erzeugt werden, ein Signal als Funktion des Verstärkungsfaktors erzeugt, wobei das als Funktion des Verstärkungsfaktors vorliegende Signal derart auf die Modulationskette einwirkt, daß der Verstärkungsfaktor konstant gehalten wird.

2. Faseroptik-Meßvorrichtung nach Anspruch 1, dadurch gekennzeichnet, daß das Verarbeitungssystem ( 9) ein Signal als Funktion des gemessenen Parameters erzeugt, das durch Auswertung der vier Werte x1, x2, x3, x4 bestimmt wird, die als Reaktion auf eine Periode des Modulationssignals nach der Formel (x1 + x4) - (x2 + x3) erzeugt werden.

3. Faseroptik-Meßvorrichtung nach einem der Ansprüche 1 oder 2, dadurch gekennzeichnet, daß die elektronischen Einrichtungen (7) als Gegenreaktion den Phasenmodulator (4) als Funktion des von dem Detektor (3) empfangenen Signals derart steuern, daß einerseits die Variation des als Funktion der Phasendifferenz um Null demodu- lierten Fehlereignals annähernd linear ist und daß andererseits diese Phasendifferenz auf Null gehalten wird und durch Auswertung des Modula- tionssignals (4) ein Signal als Funktion der Variation des gemessenen Parameters erzeugt wird.

4. Faseroptik-Meßvorrichtung nach einem der Ansprüche 1 bis 3, dadurch gekennzeichnet, daß die elektronischen Einrichtungen (7) zusätzlich zu dem Verarbeitungssystem (9) aufweisen:
   - einen Taktgeber (21), der die gesamten Bauteile synchronisiert,
   - wobei der Analog-Digital-Konverter (8) derart ausgelegt ist, daß der Analogwert seines niedrigwertigen Bits einen Wert aufweist, der geringer oder gleich dem Rauschabstand des von dem Detektor (3) kommenden Signals ist,
   - ein das aus dem numerischen Verarbei-tungssystem (9) austretende Signal auf-nehmendes numerisches Regelkreis-Filter (10), das ein für den gemessenen Parameter repräsentatives Signal erzeugt,
   - ein Register (11), das das aus dem Regelkreis-Filter austretende Signal empfängt und für den gesamten gewünschten externen Betrieb ein Signal als Funktion des gemessenen Parameters erzeugt,
   - einen das aus dem Register (11) austretende Signal aufnehmenden Akkumulator (20), der ein Signal als Gegenreaktion zu dem gemessenen Parameter erzeugt,
   - einen Modulationsgenerator (12), der ein Modulationssignal $\phi_m$ erzeugt,
   - einen zwei Eingänge und einen Ausgang aufweisenden Addierer (13), dessen erster Eingang das von dem Akkumulator (20) als Funktion des gemessenen Parameters erzeugte Signal empfängt, und dessen zwei-ter Eingang das Modulationssignal emp-fängt,
   - einen Digital-Analog-Konverter (14), der das Ausgangssignal des Addierers empfängt und den Phasenmodulator (4) über einen Verstärker (15) steuert.

5. Faseroptik-Meßvorrichtung nach Anspruch 4, dadurch gekennzeichnet, daß das sur Konstant-haltung des Verstärkungsfaktors der Befehlsket-te der Modulation vorgesehene Verarbeitungssy-stem (19) aufweist: eine Einheit (16), die vier aufeinanderfolgende Signale x1, x2, x3, x4 auswertet und ein Signal als Funktion von (x1 + x3) - (x2 + x4) erzeugt, ein das von der Einheit (16) aus-gegebene Signal integrierendes numerisches Fil-ter (17), einen Digital-Analog-Konverter (18), der das von dem Filter (17) erzeugte Signal konvertiert und den Verstärker (15) oder die Analog-Referenzspannung des Konverters (14) steuert.

6. Faseroptik-Meßvorrichtung nach einem der Ansprüche 1 bis 5, dadurch gekennzeichnet, daß das Modulationssignal eine Periode aufweist, die gleich $2\tau$ ist, und daß jede Periode zusammenge-setzt ist aus zwei aufeinanderfolgenden Elemen-ten der Dauer $\tau/2$ und jeweiligen Amplituden $\phi_1$ und $a\phi_1$, gefolgt von zwei Elementen der Dauer $\tau/2$ und jeweiligen Amplituden - $\phi_2$ und -$a\phi_2$, wobei $\phi_1 + \phi_2 = \phi_0$ ist.

7. Faseroptik-Meßvorrichtung nach einem der Ansprüche 1 bis 6, dadurch gekennzeichnet, daß a = 3.

8. Faseroptik-Meßvorrichtung nach einem der Ansprüche 1 bis 6, dadurch gekennzeichnet, daß a = 2.

9. Faseroptik-Meßvorrichtung nach Anspruch 6, dadurch gekennzeichnet, daß das Gegenreaktionssignal durch einen Akkumulator erhalten wird, und zwar ausgehend von dem numerischen Speicherregister für den Wert des gemessenen Parameters, wobei dieser Akkumulator (20) einen numerischen Integrator aufweist, der bei jedem Zeitintervall $\tau/2$ den Wert des Zahlenregisters seinem vorher- gehenden Wert hinzuaddiert.

10. Gyrometer, dadurch gekennzeichnet, daß er eine Meßvorrichtung nach einem der Ansprüche 1 bis 7 aufweist, wobei der gemessene Parameter die Drehgeschwindigkeit des Interferometers um seine Achse ist.

11. Navigations-      oder      Trägheitsstabilisierungs-Steuerung mit mindestens einem Gyrometer nach Anspruch 10.

12. Strom- oder Magnetfeldaufnehmer, dadurch gekennzeichnet, daß er eine Meßvorrichtung nach einem der Ansprüche 1 bis 9 aufweist, wobei die Variation der Phasendifferenz durch den mittels FARADAY-Effekt gemessenen Parameter erzeugt wird.

# FIG.1

# FIG.2

FIG. 3

FIG.4

EP 0 430 747 B1

FIG. 5

EP 0 430 747 B1

FIG.6